Europäisches Patentamt

European Patent Office

Office européen des brevets

(19)

(11) Veröffentlichungsnummer : **0 072 899**
**B1**

(12) # EUROPÄISCHE PATENTSCHRIFT

(45) Veröffentlichungstag der Patentschrift :
20.08.86

(21) Anmeldenummer : 82105562.1

(22) Anmeldetag : 24.06.82

(51) Int. Cl.⁴ : **C 08 F 14/06, C 08 F 2/22,**
**C 08 F255/02, C 08 L 27/06**

(54) Verfahren zur Herstellung von Polymeren und Copolymeren des Vinylchlorids und deren Verwendung.

(30) Priorität : 20.08.81 DE 3132888

(43) Veröffentlichungstag der Anmeldung :
02.03.83 Patentblatt 83/09

(45) Bekanntmachung des Hinweises auf die Patenterteilung : 20.08.86 Patentblatt 86/34

(84) Benannte Vertragsstaaten :
**BE DE FR GB IT NL SE**

(56) Entgegenhaltungen :
**EP-A- 0 054 153**
**FR-A- 2 236 898**
**GB-A- 1 021 324**
**US-A- 3 358 054**
**US-A- 3 517 083**
**US-A- 3 853 970**
**Die Akte enthält technische Angaben, die nach dem**
**Eingang der Anmeldung eingereicht wurden und die**
**nicht in dieser Patentschrift enthalten sind.**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Sielfeld, Gilbert, Dr.**
**Lipper Weg 197**
**D-4370 Marl (DE)**

EP 0 072 899 B1

Jouve, 18, rue St-Denis, 75001 Paris, France

## Beschreibung

Die Erfindung betrifft die Herstellung eines feinkörnigen Vinylchlorid-Suspensionspolymerisates und dessen Verwendung für den Einsatz als Viskositätserniedriger in der Polyvinylchlorid-Plastisolverarbeitung.

Unter Polyvinylchlorid-Plastisolen oder Polyvinylchlorid-Pasten versteht man im allgemeinen Dispersionen von feinen Polyvinylchlorid-Pulvern in Weichmachern. Als verpastbare Polyvinylchlorid-Typen eignen sich hierzu Emulsionspolymerisate und insbesondere auch Mikrosuspensionspolymerisate.

Es handelt sich hierbei um Polyvinylchlorid-Produkte, die nach der Polymerisation als Latex anfallen und im allgemeinen durch Sprühtrocknung zu agglomerierten Sekundär-Teilchen (Plastisol-Typen) aufgearbeitet werden. Bei der Plastisolaufbereitung zerfallen diese Agglomerate überwiegend in Primär-Teilchen. Der Grad dieses Zerfalls und die Größenverteilung der Primär-Teilchen bestimmen die Fließeigenschaften der Paste.

Polyvinylchlorid-Pasten werden hauptsächlich als Streichpasten, als Tauch- und Gießpasten und als Spritzpasten für die verschiedensten Fertigartikel verwendet.

Im allgemeinen werden für die Herstellung weichmacherarmer Fertigartikel Pasten mit niedrigen Viskositäten gewünscht. Für diesen Zweck ist bekannt, die Pastenviskosität durch Zusatz von nichtverpastbaren feinkörnigen Suspensions-Polyvinylchlorid-Produkten (sog. Extender-Polyvinylchlorid), die erst bei Geliertemperatur aufgeschlossen werden, zu erniedrigen.

Gemäß der DE-PS 1 645 668 können solche Suspensionspolymerisate zur Erniedrigung der Viskosität von Dispersionen aus pastenfähigem Polyvinylchlorid und Weichmachern mit Hilfe von Methylhydroxipropylcellulosen, die in 2gewichtsprozentiger Lösung eine Viskosität von 50 bis 500 m Pa · s bei 20 °C aufweisen, als einzigem Suspensionsstabilisator und unter Verwendung von monomerlöslichen Katalysatoren hergestellt werden.

Wie aus den Vergleichsbeispielen A und B hervorgeht, haben so hergestellte Polymerisate jedoch einen erheblichen Anteil grober Körner mit Teilchengröße > 100 µm. Dieses führt zu einer unerwünschten Sedimentation des Grobanteils und verursacht daher Schwierigkeiten beim Verarbeiten. Ferner führt der Grobanteil zu einer unerwünscht rauhen Oberfläche, insbesondere beim Auftrag sehr dünner Beschichtungen. Auch die Viskositätserniedrigung der Pasten durch Zusatz so hergestellter Suspensionspolymerisate genügt nicht den heutigen Forderungen der Praxis.

Wie aus Vergleichsversuch C zu entnehmen ist, können sehr feinteilige Polyvinylchlorid-Polymerisate durch Suspensionspolymerisation in Gegenwart eines Suspensionsstabilisators und eines Tensids oder Emulgators hergestellt werden.

Ein so hergestelltes Polymerisat eignet sich aufgrund seiner Feinheit und seines minimalen Grobanteils > 100 µm für dünne Beschichtungen und neigt nicht zur Sedimentation.

Aufgrund seiner sehr hohen Kornporosität, die aus dem Zusatz von Emulgatoren oder Tensiden resultiert, bewirkt jedoch das so hergestellte Produkt eine unzureichende Pastenviskositätserniedrigung.

Die Suspensionspolymerisation von Vinylchlorid in Ggw. geringer Mengen an Ethylen-Vinylacetat-Copolymerisat gehört zwar durch die GB-A-1 021 324 bereits zum Stand der Technik; gemäß dieser Literaturstelle wird jedoch der Katalysator dem Polymerisationsgemisch in fester Form zugegeben. Dadurch entsteht ein Polyvinylchlorid mit erhöhter Kornporosität, das in Abmischung mit pastenbildendem Polyvinylchlorid mangelhafte viskositätserniedrigende Eigenschaften zeigt, besonders bei hohen Schergeschwindigkeiten (Dilatanz).

Aus der US-A-3 853 970 ist bei der Suspensionspolymerisation von Vinylchlorid in Ggw. geringer Mengen Ethylen-Vinylacetat-Copolymerer auch bereits die Maßnahme bekannt, den Katalysator in gelöster Form zuzugeben (vgl. Beispiel 1). Diese Literaturstelle unterscheidet sich jedoch in zwei wesentlichen Punkten von der vorliegenden Erfindung. In allen Beispielen der US-A-3 853 970 wird nämlich PVA (Polyvinylalkohol) als Suspensionsmittel eingesetzt, womit sich jedoch kein Polyvinylchlorid herstellen läßt, das als Extender-Polyvinylchlorid (zum Senken der Viskosität in Pasten) geeignet ist. Die Körnung ist zu grob und die Teilchen sind zu porös (Weichmacheraufnahme und Pastenviskosität liegen infolgedessen zu hoch).

Die US-A-3 853 970 enthält zudem die Anweisung, bei 90 bis 165 °C zu polymerisieren (vgl. claim 1). Bei Anwendung so hoher Polymerisationstemperaturen entsteht, wie der Fachmann weiß, ein sehr niedermolekulares PVC mit einem K-Wert von 42 bis 1. Ein solches PVC hat durch seine vielen Fehlstellen zwangsläufig eine sehr schlechte Thermostabilität und auch eine geringe mechanische Beanspruchbarkeit. Die Folge ist ein drastischer Rückgang der Zugfestigkeit und der Bruchdehnung an Preßplatten, bei denen als Extender-PVC ein derartig niedermolekulares PVC eingesetzt wurde.

Diese Nachteile wurden überwunden durch ein Verfahren zur Herstellung von Polymeren und Copolymeren des Vinylchlorids, wie es durch die Patentansprüche gekennzeichnet ist.

Erfindungsgemäß sind die im allgemeinen festen, bei Raumtemperatur lagerstabilen Katalysatoren mit Hilfe von 0,05 bis 5 Gewichtsprozent, vorzugsweise 0,3 bis 3 Gewichtsprozent, bezogen auf das Monomer oder die Monomermischung, inertem Lösungsmittel oder Lösungsmittelgemisch in Lösung zu bringen. Die Katalysatoren können so in gelöster Form dem Polymerisationskessel zugeführt werden, zweckmäßigerweise vor der Zugabe der Monomeren bzw. des Monomerengemisches. Gegebenenfalls kann der Lösevorgang auch im Kessel selbst vor der Monomerzugabe erfolgen. Hierzu eignen sich alle üblichen Lösungsmittel, welche die eingesetzten Katalysatoren zu lösen vermögen. Insbesondere sind inerte, aliphatische Kohlenwasserstoffe wie n-Hexan, Cyclohexan, Testbenzin, aromatische Kohlenwasserstoffe wie Toluol, Xylol oder übliche primäre oder sekundäre Weichmacher für Vinylchlorid-Polymerisate, wie $C_2$-$C_{14}$-Alkylester von Dicarbonsäure, einzusetzen.

Beispiele für besonders bevorzugte Weichmacher sind Di-Ethylhexylphthalat, Dibutylphthalat, Di-2-n-heptylphthalat und Diisodecylphthalat.

Sie werden in Mengen von 0,05 bis 5 Gewichtsprozent, vorzugsweise 0,5 bis 3 Gewichtsprozent, bezogen auf das Monomere oder Monomergemisch, eingesetzt.

Werden aus anwendungstechnischen Gründen molmassenmodifizierte Produkte gewünscht, so können als geeignete Lösemittel für die Katalysatoren die üblichen Molmassenregler, wie beispielsweise chlorierte oder bromierte Kohlenwasserstoffe und/oder Kettenverzweigungsmittel wie zum Beispiel Phthalsäurediallylester oder Maleinsäurediallylester, verwendet werden.

Als Lösungsmittel für die in der Vinylchlorid-Polymerisation üblicherweise einzusetzenden Katalysatoren wären, theoretisch betrachtet, auch das Monomere Vinylchlorid oder Comonomere, wie beispielsweise Vinylacetat, einzusetzen.

Aus sicherheitstechnischen Gründen wird man von dieser Möglichkeit jedoch absehen.

Brauchbare Katalysatoren sind die in der Vinylchlorid-Polymerisation üblicherweise einzusetzenden Katalysatoren, wie Diacylperoxide, Peroxydicarbonate, Alkylperester oder Azoverbindungen. Aus sicherheitstechnischen Gründen eignen sich jedoch besonders bei Raumtemperatur feste und lagerstabile Initiatoren. Beispiele geeigneter lagerstabiler Initiatoren sind Lauroylperoxid, Bis-(4-t-butylcyclohexyl)-peroxydicarbonat, Dimyristylperoxydicarbonat, Dicetylperoxydicarbonat, Bis-(2-methylbenzoyl)-peroxid.

Als erfindungsgemäß einzusetzende Ethylen/Vinylacetat-Copolymere eignen sich solche, die aus 38 bis 55 Gewichtsprozent, vorzugsweise 42 bis 48 Gewichtsprozent Vinylacetat, Rest Ethylen, zusammengesetzt sind und eine Viskositätszahl von 95 bis 210 (ml/g), vorzugsweise 110 bis 160 ml/g, gemessen in Toluol in einer Konzentration von 0,005 g/cm³ bei 25 °C aufweisen. Sie werden in Mengen von 0,4 bis 8 Gewichtsprozent, vorzugsweise 0,6 bis 3 Gewichtsprozent, bezogen auf das Monomere oder Monomergemisch, eingesetzt. Sie können in fester Form oder in gelöster Form, gegebenenfalls zusammen mit den Katalysatoren, dem Polymerisationskessel zugeführt werden. Brauchbare Lösungsmittel für diese Copolymeren sind die für die Vinylchlorid-Katalysatoren typischen Lösungsmittel, wie beispielsweise aromatische, aliphatische Kohlenwasserstoffe oder übliche Polyvinylchlorid-Weichmacher, wie Ester von Polycarbonsäuren. Der Lösevorgang kann vor oder nach der Zugabe des Monomeren oder Monomerengemisches vorgenommen werden. Die Ethylen-Vinylacetat-Copolymeren sind unter dem Handelsnamen LEVAPREN® im Handel erhältlich. Sie können durch radikalische Polymerisation in Lösung bei einem Druck von 100 bis 400 bar und einer Temperatur von 30 bis 250 °C hergestellt werden, z. B. gemäß DE-PS 11 26 613.

Als Suspensionsstabilisatoren können die in der Suspensionspolymerisation üblicherweise eingesetzten Celluloseether verwendet werden. Beschrieben sind solche Mittel in der Monographie von Kainer, Polyvinylchlorid und Vinyl-Vinylchlorid-Mischpolymerisate, Springer Verlag (1965), Seite 16 ff.

Als Suspensionsstabilisatoren oder Schutzkolloide können vorzugsweise die im Handel befindlichen Methylcellulosen mit Methoxyl-Substitutionsgraden von 22 bis 34 % und Viskositäten von 10 bis 5 000 mPa · s, vorzugsweise 10 bis 100 mPa · s, gemessen in 2gewichtsprozentiger wäßriger Lösung (gemessen nach Brookfield bei 20 °C und 20 Upm) und/oder Methylhydroxypropylcellulosen mit Methoxyl-Substitutionsgraden von 20 bis 32 % und Hydroxy-Propoxyl-Substitutionsgraden von 2 bis 9 % und Viskositäten von 25 bis 5 000, vorzugsweise 40 bis 120 mPa · s, gemessen in einer 2gewichtsprozentigen wäßrigen Lösung (Ubbelohde-Kapillarviskosimeter) bei 20 °C eingesetzt werden.

Sie werden gewöhnlich in Mengen von 0,05 bis 1,5 Gewichtsprozent, vorzugsweise 0,1 bis 1,0 Gewichtsprozent, bezogen auf das Monomere, eingesetzt.

Als weitere Polymerisationshilfsstoffe sind gegebenenfalls pH-Puffersysteme wie Ammoniumsalze, Ammoniak oder Alkalicarbonate, Kettenregler wie zum Beispiel aliphatische Aldehyde, Trichlorethylen, Hilfsstoffe gegen Wandabscheidungen, Antioxidantien zu verwenden.

Die Polymerisation kan bei üblichen Temperaturen zwischen 45 und 75 °C, und den entsprechenden Drücken durchgeführt werden.

Der Einsatz von bis zu 30 Gewichtsprozent mit Vinylchlorid polymerisierbarer Monomerer zur Herstellung von Copolymeren ist möglich. Beispiele brauchbarer Comonomerer sind Vinylester wie Vinylacetat, Vinylidenhalogenide wie Vinylidenchlorid, Acrylsäure- und Methacrylsäurealkylester mit 1 bis 18 Kohlenstoffatomen im Alkylrest, wie die Methyl-, n-Butyl- und Laurylester, Ester der Maleinsäure, wie Diethyl-, Dipropylmaleinat und schließlich Monoolefine wie Ethylen oder Propylen.

Die Aufarbeitung der erfindungsgemäßen Suspensionspolymerisate wird nach üblichen Verfahren durchgeführt. Die üblicherweise entgaste wäßrige Polyvinylchlorid-Suspension kann zunächst in einer Zentrifuge entwässert, gegebenenfalls mit reinem Wasser gewaschen und anschließend einem Stromtrockner zugeführt werden. Gegebenenfalls kann eine weitere Trocknung in einem Trommeltrockner vorgenommen werden.

Die nach Anspruch 1 bis 6 hergestellten Polymerisate werden erfindungsgemäß in Mischung mit 95 bis 45 Gewichtsprozent, vorzugsweise 90 bis 50 Gewichtsprozent pastenfähigen Polyvinylchlorid, wie Emulsions- oder Mikrosuspensions-Polyvinylchlorid, als Viskositätserniedriger eingesetzt. Als mit Weichmachern und anderen Zusätzen verpastbare Polyvinylchlorid-Typen werden bekanntlich Emulsions- oder Mikrosuspensionspolymerisate verwendet.

Zur weiteren Erläuterung der Erfindung dienen die folgenden Beispiele. Die angegebenen Teile sind Gewichtsteile.

### Beispiel 1

Ein mit Impeller-Rührer und Pfaudler-Stromstörer ausgerüsteter 40 1-Polymerisationsautoklav aus rostfreiem Stahl wurde mit folgenden Bestandteilen beschickt: 17 000 Teile Wasser, 10 Teile Natriumcarbonat, 60 Teile einer in 1 500 Teilen Wasser gelösten Methylhydroxypropylcellulose mit einem Methoxylgehalt von 22,1 Gewichtsprozent, einem Hydroxy-Propoxyl-Gehalt von 8,1 Gewichtsprozent und einer Viskosität von 100 mPa · s (gemessen in einem Ubbelohde-Kapillarviskosimeter an 2gewichtsprozentiger wäßriger Lösung bei 20 °C), 3.4 Teilen Dicetylperoxydicarbonat und 6 Teile Dilauroylperoxid gelöst in 310 Teilen Cyclohexan, und 100 Teile eines Ethylen/Vinylacetat-Copolymeren mit einem Vinylacetatgehalt von 45 Gewichtsprozent und einer Viskositätszahl von 138 ml/g gemessen in Toluol in einer Konzentration von 0,005 g/cm$^3$ bei 25 °C. Der Kessel wurde geschlossen, mit Stickstoff gespült, evakuiert, anschließend mit 11 200 Teilen Vinylchlorid beschickt und zur Lösung des Ethylen/Vinylacetat-Copolymers drei Stunden bei Raumtemperatur gerührt. Danach wurde bei einer Temperatur von 60 °C bis zu einem Druck von 5 bar polymerisiert. Das Produkt wurde nach Entgasung vom größten Teil des Suspensionswassers getrennt, mit Wasser gespült und bei 50 °C in einem Wirbelbettrockner getrocknet. Wie aus Tabelle 1 zu entnehmen ist, resultiert ein sehr feines Produkt, das in Abmischung mit verpastbarem PVC eine deutliche Erniedrigung der Pastenviskosität bewirkt.

### Beispiel 2

Es wurde wie in Beispiel 1 verfahren, jedoch wurde das Ethylen/Vinylacetat-Copolymer zusammen mit den Peroxiden in 460 Teilen Cyclohexan gelöst. Wie aus Tabelle 1 zu entnehmen ist, weist das so hergestellte Produkt ein sehr feines Korn und in Abmischung mit verpastbarem PVC eine ausgeprägte viskositätserniedrigende Eigenschaft auf.

(Siehe Tabelle 1 Seite 5 f.)

Tabelle 1

| | Korngrößenverteilung Siebrückstand in Gew.-% bei folgender Maschenw. | | | | Schüttdichte[1] [g/l] | WM-Aufnahme[2] [g DOP / 100 g PVC] | Pastenviskosität[3] in d Pa·s bei folgenden Schergeschwindigkeiten | | | | Reißkraft[4] [N/mm²] | Reißdehnung[4] [%] |
|---|---|---|---|---|---|---|---|---|---|---|---|---|
| | 40 μm | 63 μm | 100 μm | 160 μm | | | $0,3s^{-1}$ | $1s^{-1}$ | $10s^{-1}$ | $100s^{-1}$ | | |
| Beispiel 1 | 56 | 1,3 | - | - | 704 | 5,0 | 120 | 88 | 88 | 98 | 12,5 | 117 |
| Beispiel 2 | 63 | 0,1 | - | - | 710 | 5,7 | 85 | 83 | 92 | 106 | 14,6 | 159 |
| Vergleichsbeispiel A | 84 | 58 | 5,1 | 0,2 | 574 | 13,8 | 208 | 208 | 223 | - | 11,9 | 112 |
| Vergleichsbeispiel B | 81 | 33 | 9,2 | 0,2 | 640 | 10,3 | 138 | 131 | 146 | 147 | 11,8 | 120 |
| Vergleichsbeispiel C | 63 | 2,6 | 0,2 | - | 523 | 14,0 | 687 | 637 | 569 | 494 | 16,7 | 156 |
| Vergleichsbeispiel D | 75 | 32,0 | 1,0 | 0,1 | 558 | 12,2 | 345 | 340 | 303 | 242 | 11,0 | 100 |
| Beispiel 3 | 74 | 2,9 | 0,03 | - | 687 | 6,5 | 78 | 72 | 82 | 97 | 13,4 | 115 |
| Beispiel 4 | 68 | 2,3 | 0,02 | - | 698 | 6,6 | 95 | 100 | 115 | 129 | 12,6 | 114 |
| Vergleichsbeispiel E | 79 | 56 | 31,4 | 10,0 | 601 | 13,1 | 162 | 152 | 161 | 167 | 11,6 | 120 |
| Beispiel 5 | 76 | 2,8 | 0,02 | - | 663 | 6,6 | 120 | 105 | 110 | 120 | 12,1 | 127,7 |
| Beispiel 6 | 54 | 0,9 | - | - | 721 | 5,4 | 79 | 76 | 89 | 103 | 15,4 | 168 |

[1] nach DIN 53 468

[2] nach DIN 53 417/1 (Zentrifugierverfahren)

[3] Pastenrezeptur : 50 Gewichtsteile Microsuspensions-Polyvinylchlorid
50 Gewichtsteile erfindungsgemäß hergestelles Polyvinylchlorid
38 Gewichtsteile Di-2-Ethylhexylphthalat
2 Gewichtsteile Ba/Cd/Zn-Stabilisator

Pastenviskosität wurde in einem Rheomat (Fa. Contraves) nach 24 h Lagerzeit gemessen.

[4] Gelierfähigkeit der Paste (nach Entlüftung) wurde an 1 mm-Preßplatten (Gelierzeit von 1 min bei 170 °C) nach DIN 53 455 (Zugversuch) gemessen. Die Reißkraft-Werte und die Reißdehnungs-Werte sind Durchschnittswerte aus 7 Meßwerten.

**0 072 899**

Vergleichsbeispiel A (gemäß DE-PS 1 645 668)

Es wurde wie in Beispiel 1 verfahren, jedoch wurde in Abwesenheit von Cyclohexan und Ethylen/Vinylacetat-Copolymer polymerisiert. Wie aus Tabelle 1 zu entnehmen ist, resultiert ein Produkt mit einem unerwünschten, hohen Grobanteil größer 100 μm. Darüber hinaus bewirkt das so hergestellte Produkt eine unzureichende Pastenviskositätserniedrigung in Abmischung mit verpastbarem PVC.

Vergleichsbeispiel B (gemäß DE-PS 1 645 668)

Es wurde wie in Vergleichsbeispiel A verfahren, jedoch wurden 30 Teile Methylhydroxypropylcellulose eingesetzt. Wie aus Tabelle 1 zu entnehmen ist, resultiert auch hier ein Produkt mit einem zu hohen Anteil größer 100 μm.

Vergleichsbeispiel C

Es wurde wie in Vergleichsbeispiel B verfahren, jedoch wurden 40 Teile Methylhydroxypropylcellulose und zusätzlich 2,5 Teile Natriumlaurylsulfat eingesetzt. Wie aus Tabelle 1 zu entnehmen ist, resultiert durch Anwesenheit des Tensids ein feines Produkt, das jedoch aufgrund einer erhöhten Kornporosität (Weichmacheraufnahme) mangelhafte viskositätserniedrigende Eigenschaften in Abmischung mit verpastbarem PVC-Typ aufweist.

Vergleichsbeispiel D

Es wurde wie im Vergleichsbeispiel C verfahren, jedoch wurden 1,5 Teile Natriumlaurylsulfat eingesetzt. Wie aus Tabelle 1 zu entnehmen ist, resultiert auch hier ein Produkt mit mangelhafter viskositätserniedrigender Eigenschaft.

Beispiel 3

Es wurde wie in Beispiel 1 verfahren, jedoch wurden die Initiatoren und das Ethylen/Vinylacetat-Copolymer in 7 200 Teilen Vinylchlorid gelöst und dem mit Wasser, Natriumcarbonat und Suspensionsstabilisator gefüllten Kessel zugeführt. Anschließend wurden die restlichen 4 000 Teile Vinylchlorid zugegeben. Wie aus Tabelle 1 zu entnehmen ist, resultiert ein sehr feines Produkt mit ausgeprägter viskositätserniedrigender Eingeschaft in Abmischung mit verpastbarem PVC.

Beispiel 4

Es wurde wie in Beispiel 1 verfahren, jedoch wurden anstelle der Methylhydroxypropylcellulose 60 Teile einer Methylcellulose mit einer Viskosität von 60 mPa · s gemessen nach Brookfield (2gewichtsprozentige wäßrige Lösung bei 20 °C und 20 Upm) und einem Methoxyl-Substitutionsgrad von 28 % eingesetzt. Wie aus Tabelle 1 zu entnehmen ist, weist das so hergestellte Produkt ein sehr feines Korn und eine ausgeprägte viskositätserniedrigende Eigenschaft in Abmischung mit verpastbarem PVC auf.

Vergleichsbeispiel E

Es wurde wie in Vergleichsbeispiel A verfahren, jedoch wurden anstelle der Methylhydroxypropylcellulose 60 Teile einer Methylcellulose mit einer Viskosität von 60 mPa · s gemessen nach Brookfield (2gewichtsprozentige wäßrige Lösung bei 20 °C und 20 Upm) und einem Methoxyl-Substitutionsgrad von 28 % eingesetzt. Wie aus der Tabelle 1 zu entnehmen ist, weist das so hergestellte Produkt einen sehr hohen Anteil größer 100 μm und eine mangelhafte viskositätserniedrigende Wirkung in Abmischung mit verpastbarem PVC auf.

Beispiel 5

Es wurde wie in Beispiel 2 verfahren, jedoch wurden anstelle der Methylhydroxypropylcellulose gleiche Teile der in Beispiel 4 verwendeten Methylcellulose eingesetzt. Die Initiatoren wurden zusammen mit dem Ethylen/Vinylacetat-Copolymer in 310 Teilen Cyclohexan gelöst. Wie aus Tabelle 1 zu entnehmen ist, weist das so hergestellte Produkt ein sehr feines Korn und eine ausgeprägte viskositätserniedrigende Eigenschaft in Abmischung mit verpastbaren PVC auf.

Beispiel 6

Es wurde wie in Beispiel 1 verfahren, jedoch wurde anstelle der 310 Teile Cyclohexan 200 Teile Di-2-ethylhexylphthalat eingesetzt. Wie aus der Tabelle 1 zu entnehmen ist, weist das so hergestellte Produkt ein sehr feines Korn und eine ausgeprägte viskositätserniedrigende Eigenschaft in Abmischung mit verpastbaren PVC auf.

6

# 0 072 899

**Patentansprüche**

1. Verfahren zur Herstellung von Polymeren und Copolymeren des Vinylchlorids durch Suspensionspolymerisation bei 45 bis 75 °C in Gegenwart von monomerenlöslichen Katalysatoren und von einem oder mehreren Celluloseethern als Suspensionsstabilisatoren und gegebenenfalls pH-Puffersystemen, dadurch gekennzeichnet, daß in Gegenwart von 0,4 bis 8,0 Gewichtsprozent von Ethylen/Vinylacetat-Copolymerisaten mit einem Vinylacetat-Gehalt von 38 bis 55 Gewichtsprozent und mit einer Viskositätszahl von 95 bis 210 ml/g, gemessen in Toluol, in einer Konzentration von 0,005 g/cm$^3$ bei 25 °C polymerisiert wird und daß der Katalysator dem Polymerisationsansatz in gelöster Form zugegeben oder vor der Zugabe des bzw. der Monomeren im Polymerisationskessel gelöst wird.

2. Verfahren nach Anspruch 1, dadurch gekennzeichnet, daß in Gegenwart von Ethylen-Vinylacetat-Copolymerisaten mit einem Vinylacetat-Gehalt von 42 bis 48 Gewichtsprozent polymerisiert wird.

3. Verfahren nach Anspruch 1 und 2, dadurch gekennzeichnet, daß in Gegenwart von Ethylen-Vinylacetat-Copolymerisaten mit einer Viskositätszahl von 110 ml/g bis 160 ml/g, gemessen in Toluol in einer Konzentration von 0,005 g/cm$^3$ bei 25 °C, polymerisiert wird.

4. Verfahren nach Anspruch 1, dadurch gekennzeichnet, daß als Suspensionsstabilisatoren 0,1 bis 1,0 Gewichtsprozent, bezogen auf das Monomere oder Monomergemisch, einer Methylcellulose mit einem Methoxyl-Substitutionsgrad von 22 bis 34 % und einer Viskosität von 10 bis 5 000 mPa · s, vorzugsweise 10 bis 100 mPa · s, gemessen in 2gewichtsprozentiger wäßriger Lösung (gemessen nach Brookfield bei 20 °C und 20 Upm) und/oder einer Methylhydroxypropylcellulose mit einem Methoxyl-Substitutionsgrad von 20 bis 32 Prozent und einem Hydroxy-Propoxyl-Substitutionsgrad von 2 bis 9 % und einer Viskosität von 25 bis 5 000 mPa · s, vorzugsweise 40 bis 120 mPa · s, gemessen in einer 2gewichtsprozentigen wäßrigen Lösung (Ubbelohde-Kapillarviskosimeter bei 20 °C), eingesetzt werden.

5. Verfahren nach Anspruch 1 und 2, dadurch gekennzeichnet, daß die Katalysatoren vor der Zugabe des Monomeren gelöst werden.

6. Verfahren nach Anspruch 1 bis 4, dadurch gekennzeichnet daß in Gegenwart von 0,6 bis 3 Gewichtsprozent Ethylen/Vinylacetat-Copolymeren, bezogen auf das Monomere oder Monomergemisch, polymerisiert wird.

7. Verwendung der nach Anspruch 1 bis 6 hergestellten Vinylchlorid-Polymerisate und Copolymerisate zur Erniedrigung der Viskosität von Dispersionen aus patenfähigen Vinylchlorid-Polymerisaten und Copolymerisaten, Weichmachern und ggf. weiteren Zusatzstoffen.

**Claims**

1. A process for the production of a homopolymer or copolymer of vinyl chloride by suspension polymerisation at 45 to 75 °C in the presence of a monomer-soluble catalyst and of one or more cellulose ethers as suspension stabiliser(s) and optionally of a pH buffer system, characterised in that the polymerisation is carried out in the presence of 0.4 to 8 per cent by weight of an ethylene/vinyl acetate copolymer having a vinyl acetate content of 38 to 55 per cent by weight and a viscosity number of 95 to 210 ml/g, measured in toluene at a concentration of 0.005 g/cm$^3$ at 25 °C, and in that the catalyst is added to the polymerisation charge in dissolved form or is dissolved before the addition of the monomer(s) to the polymerisation vessel.

2. A process according to claim 1, characterised in that the polymerisation is carried out in the presence of an ethylene/vinyl acetate copolymer having a vinyl acetate content of 42 to 48 per cent by weight.

3. A process according to claim 1 or 2, characterised in that the polymerisation is carried out in the presence of an ethylene/vinyl acetate copolymer having a viscosity number of 110 to 160 ml/g, measured in toluene at a concentration of 0.005 g/cm$^3$ at 25 °C.

4. A process according to claim 1, characterised in that 0.1 to 1 per cent by weight, based on the monomer(s) or monomer mixture, of a methyl cellulose having a degree of methoxy substitution of 22 to 34 per cent and a viscosity of 10 to 5 000 mPa · s, preferably 10 to 100 mPa · s, measured in a 2 per cent by weight aqueous solution (measured according to Brookfield at 20 °C and 20 Upm) and/or of a methylhydroxypropyl cellulose having a degree of methoxy substitution of 20 to 32 per cent and a degree of hydroxypropoxy substitution of 2 to 9 per cent and a viscosity of 25 to 5 000 mPa · s, preferably 40 to 120 mPa · s, measured in a 2 per cent by weight aqueous solution (Ubbelohde capillary viscometer at 20 °C), is used as suspension stabiliser(s).

5. A process according to claim 1 or 2, characterised in that the catalyst is dissolved before the addition of the monomer(s).

6. A process according to any of claims 1 to 4, characterised in that the polymerisation is carried out in the presence of 0.6 to 3 per cent by weight of an ethylene/vinyl acetate copolymer, based on the monomer(s) or monomer mixture.

7. The use of a vinyl chloride homopolymer or copolymer produced according to any of claims 1 to 6 for lowering the viscosity of a dispersion of a paste-forming vinyl chloride homopolymer or copolymer, a plasticiser and optionally further additive(s).

**Revendications**

1. Procédé pour la préparation de polymères et de copolymères du chlorure de vinyle par polymérisation en suspension, à 45 à 75 °C, en présence de catalyseurs solubles dans le monomère et d'un ou plusieurs éthers de cellulose comme stabilisants de suspension et éventuellement de systèmes tampons de pH, caractérisé par le fait que l'on polymérise en présence de 0,4 à 8,0 % en poids de produits de copolymérisation d'éthylène et d'acétate de vinyle ayant une teneur en acétate de vinyle de 38 à 55 % en poids et un indice de viscosité de 95 à 210 ml/g, mesuré dans le toluène à une concentration de 0,005 g/cm$^3$ à 25 °C et que l'on ajoute le catalyseur sous forme dissoute au mélange de polymérisation ou qu'on le dissout dans le récipient de polymérisation avant l'addition du ou des monomères.

2. Procédé selon la revendication 1, caractérisé par le fait que l'on polymérise en présence de produits de copolymérisation d'éthylène et d'acétate de vinyle ayant une teneur en acétate de vinyle de 42 à 48 % en poids.

3. Procédé selon les revendications 1 et 2, caractérisé par le fait que l'on polymérise en présence de produits de copolymérisation d'éthylène et d'acétate de vinyle ayant un indice de viscosité de 110 ml/g à 160 ml/g, mesuré dans le toluène à une concentration de 0,005 g/cm$^3$ à 25 °C.

4. Procédé selon la revendication 1, caractérisé par le fait que l'on utilise comme stabilisants de suspension de 0,1 à 1,0 % en poids, relativement au monomère ou au mélange de monomères, d'une méthyl-cellulose ayant un degré de substitution méthoxyle de 22 à 34 % et une viscosité de 10 à 5 000 mPa · s, de préférence de 10 à 100 mPa · s, mesurée en solution aqueuse à 2 % en poids (mesurée selon Brookfield à 20 °C et à 20 tours/mn) et/ou d'une méthyl-hydroxy-propyl-cellulose ayant un degré de substitution méthoxyle de 20 à 32 % et un degré de substitution hydroxy-propoxyle de 2 à 9 % et une viscosité de 25 à 5 000 mPa · s, de préférence de 40 à 120 mPa · s, mesurée dans une solution aqueuse à 2 % en poids (viscosimètre à capillaire Ubbelohde à 20 °C).

5. Procédé selon les revendications 1 et 2, caractérisé par le fait que l'on dissout les catalyseurs avant l'addition du monomère.

6. Procédé selon les revendications 1 à 4, caractérisé par le fait que l'on polymérise en présence de 0,6 à 3 % en poids de copolymères d'éthylène et d'acétate de vinyle, relativement au monomère ou mélange de monomère.

7. L'utilisation des produits de polymérisation et de copolymérisation préparés selon les revendications 1 à 6, pour l'abaissement de la viscosité de dispersions de produits de polymérisation et de copolymérisation délayables du chlorure de vinyle, de plastifiants et éventuellement d'autres additifs.